# EUROPEAN PATENT SPECIFICATION

(11) **EP 4 029 883 B1**
(45) Date of publication and mention of the grant of the patent: **05.03.2025**
(21) Application number: 20862645.7
(22) Date of filing: 09.09.2020
(51) Int. Cl.: C08F 6/22, C08F 20/02, C08K 3/04

(54) **METHOD FOR PRODUCING ACRYLIC RUBBER**
VERFAHREN ZUR HERSTELLUNG VON ACRYLKAUTSCHUK
PROCÉDÉ DE PRODUCTION DE CAOUTCHOUC ACRYLIQUE

(30) Priority: 12.09.2019 JP 2019165958
(43) Date of publication of application: 20.07.2022
(73) Proprietor: Osaka Soda Co., Ltd., Osaka-shi Osaka 550-0011 (JP)
(72) Inventor: MOROOKA, Yoshihiro, Osaka-shi, Osaka 550-0011 (JP); YANO, Tomoyuki, Osaka-shi, Osaka 550-0011 (JP); ASAI, Hisashi, Osaka-shi, Osaka 550-0011 (JP); NAITOU, Masatsugu, Osaka-shi, Osaka 555-0011 (JP); MATSUO, Takashi, Osaka-shi, Osaka 550-0011 (JP); KITAGAWA, Motoki, Osaka-shi, Osaka 555-0011 (JP)
(74) Representative: Müller-Boré & Partner Patentanwälte PartG mbB
(86) International application number: PCT/JP2020/034098
(87) International publication number: WO 2021/049524

(56) References cited:
- EP-A1- 3 533 807
- WO-A1-2018/079786
- JP-A- 2003 040 902
- JP-A- 2003 277 431
- JP-A- 2018 168 343
- JP-A- H07 224 108
- JP-B1- S4 618 141
- JP-B1- S4 626 972

## Description

### TECHNICAL FIELD

The present invention relates to a method for manufacturing acrylic rubber, and more specifically to a method for manufacturing acrylic rubber excellent in storage stability.

### BACKGROUND ART

Acrylic rubber is a polymer containing an acrylate as a main component, and is generally known as rubber excellent in heat resistance, oil resistance, and ozone resistance, and is widely used in the automobile industry.

Such acrylic rubber is usually obtained through a procedure in which a monomer mixture to constitute acrylic rubber is subjected to emulsion polymerization to obtain an emulsion polymerization solution, a coagulant is added to the emulsion polymerization solution to obtain a hydrous crumb, and the hydrous crumb is dried to obtain acrylic rubber.

In methods for manufacturing acrylic rubber, manufacturing conditions for each step have been studied, and Patent Document 1 discloses that adjusting the residual calcium content and the pH of a polymer enables the resulting crosslinked acrylic rubber product to have an excellent physical property.

### PRIOR ART DOCUMENT

### PATENT DOCUMENT

Patent Document 1: WO 2018/147142

### SUMMARY OF THE INVENTION

### PROBLEMS TO BE SOLVED BY THE INVENTION

However, as a result of examination by the present inventors, it has been confirmed that the storage stability of the resulting acrylic rubber depends on the method for manufacturing the acrylic rubber. The present invention has been made in view of such circumstances, and an object of the present invention is to provide a method for manufacturing acrylic rubber excellent in storage stability.

### MEANS FOR SOLVING THE PROBLEM

As a result of intensive studies to achieve the above-described object, the present inventors have found that acrylic rubber excellent in storage stability can be manufactured with the method for manufacturing acrylic rubber described below, and completed the present invention. The method includes an emulsion polymerization step of subjecting a monomer to emulsion polymerization to obtain an emulsion polymerization solution, a coagulation step of coagulating the emulsion polymerization solution with a coagulant to obtain a hydrous crumb, and a drying step of drying the hydrous crumb, and after the emulsion polymerization step, includes a base step of adding a base, and at the time of using, before the base step, an ester compound other than the monomer to constitute acrylic rubber, the amount of the base to be used is adjusted to obtain acrylic rubber excellent in storage stability.

Aspects of the present invention are as follows.

Item 1 A method for manufacturing acrylic rubber, the method including:
an emulsion polymerization step of subjecting a monomer to emulsion polymerization to obtain an emulsion polymerization solution;
a coagulation step of coagulating the emulsion polymerization solution with a coagulant to obtain a hydrous crumb;
a drying step of drying the hydrous crumb; and
a base step of adding a base after the emulsion polymerization step,
wherein an ester compound other than the monomer to constitute acrylic rubber is used before the base step, and
a relationship of 0.15 ≤ (X/Y)/Z ≤ 2.5 is satisfied wherein X represents an amount of the base used in the base step by part by mass based on 100 parts by mass of the ester compound, Y represents a molecular weight of the base used in the base step, and Z represents a valence of the base used in the base step.

Item 2 The method according to Item 1, wherein the ester compound is a phosphate ester compound and/or a sulfate ester compound.

Item 3 A method for manufacturing an acrylic rubber-containing composition, the method including a step of blending a crosslinking agent into the acrylic rubber obtained with the method according to Item 1 or 2.

Item 4 A method for manufacturing a crosslinked acrylic rubber product, the method including a step of crosslinking an acrylic rubber composition obtained with the method according to Item 3.

### ADVANTAGES OF THE INVENTION

The present invention is a method for manufacturing acrylic rubber excellent in storage stability. The acrylic rubber obtained with the method for manufacturing of the present invention is excellent in storage stability, and therefore the processability of the acrylic rubber does not extremely deteriorate even if the acrylic rubber is stored for a long period of time, and scorch (crosslinking before the crosslinking step) can be prevented.

### EMBODIMENTS OF THE INVENTION

The acrylic rubber manufactured with the method for manufacturing of the present invention is a polymer containing, as a main component, a constituent unit derived from a (meth)acrylate. Here, the term "main component" means that the constituent unit derived from a (meth)acrylate is contained at a content of 50 mass% or more. The term "(meth)acrylate" means "acrylate or methacrylate", and the same applies to similar expressions in the present application.

Examples of the constituent unit derived from a (meth)acrylate include constituent units derived from an alkyl (meth)acrylate and constituent units derived from an alkoxyalkyl (meth)acrylate. The constituent unit derived from a (meth)acrylate is preferably a constituent unit derived from an alkyl (meth)acrylate having an alkyl group with 1 to 8 carbon atoms or a constituent unit derived from an alkoxyalkyl (meth)acrylate having an alkoxyalkyl group with 2 to 8 carbon atoms, more preferably includes a constituent unit derived from an alkyl (meth)acrylate having an alkyl group with 2 to 6 carbon atoms and/or a constituent unit derived from an alkoxyalkyl (meth)acrylate having an alkoxyalkyl group with 2 to 6 carbon atoms, and particularly preferably includes a constituent unit derived from an alkyl (meth)acrylate having an alkyl group with 2 to 4 carbon atoms and/or a constituent unit derived from an alkoxyalkyl (meth)acrylate having an alkoxyalkyl group with 2 to 4 carbon atoms. The constituent unit derived from a (meth)acrylate may be a constituent unit derived from a single (meth)acrylate or from two or more (meth)acrylates.

Specific examples of the alkyl (meth)acrylate include (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, and cyclohexyl (meth)acrylate, and ethyl (meth)acrylate and n-butyl (meth)acrylate are preferable.

Specific examples of the alkoxyalkyl (meth)acrylate include (meth)acrylates such as methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, and 4-ethoxybutyl (meth)acrylate, and methoxyethyl (meth)acrylate is preferable.

The acrylic rubber of the present invention more preferably contains the constituent unit derived from a (meth)acrylate at a content of 50 mass% or more and particularly preferably 60 mass% or more based on all the constituent units in the acrylic rubber. The upper limit of the content is preferably 99.5 mass% or less, more preferably 99 mass% or less, and particularly preferably 98.5 mass% or less.

The acrylic rubber of the present invention contains a constituent unit derived from an unsaturated monomer having a crosslinking group. Examples of the constituent unit derived from an unsaturated monomer having a crosslinking group include constituent units derived from an unsaturated monomer having a halogen group (such as a chlorine group), constituent units derived from an unsaturated monomer having a carboxy group, and constituent units derived from an unsaturated monomer having an epoxy group, and the constituent units derived from an unsaturated monomer including an unsaturated monomer having a halogen group (particularly, a chlorine group) or a carboxyl group are particularly preferable.

Examples of the unsaturated monomer having a halogen group include vinyl monochloroacetate and allyl chloroacetate, and vinyl monochloroacetate is preferable.

Examples of the unsaturated monomer having a carboxy group include unsaturated monocarboxylic acids such as (meth)acrylic acid, crotonic acid, 2-pentenoic acid, and cinnamic acid, unsaturated dicarboxylic acids such as fumaric acid, maleic acid, and itaconic acid, carboxylic anhydrides such as maleic anhydride and citraconic anhydride, butenedioic acid mono chain alkyl esters such as monomethyl fumarate, monoethyl fumarate, mono-n-butyl fumarate, monomethyl maleate, monoethyl maleate, mono-2-ethylhexyl maleate, and mono-n-butyl maleate, butenedioic acid mono cyclic alkyl esters such as monocyclopentyl fumarate, monocyclohexyl fumarate, monocyclopentyl maleate, and monocyclohexyl maleate, and itaconic acid monoesters such as monomethyl itaconate, monoethyl itaconate, mono-n-butyl itaconate, and monocyclohexyl itaconate. Among these unsaturated monomers, unsaturated dicarboxylic acid monoesters such as monoethyl fumarate, monopropyl fumarate, monobutyl fumarate, monoethyl itaconate, monopropyl itaconate, and monobutyl itaconate are particularly mentioned as an example.

Examples of the unsaturated monomer having an epoxy group include glycidyl (meth)acrylate and (meth)allyl glycidyl ether.

The content of the constituent unit derived from an unsaturated monomer having a crosslinking group in the acrylic rubber is preferably 0.1 mass% or more, more preferably 0.3 mass% or more, and particularly preferably 0.5 mass% or more, and preferably 10 mass% or less, more preferably 5 mass% or less, and particularly preferably 2.5 mass% or less based on all the constituent units in the acrylic rubber. The content of the constituent unit derived from an unsaturated monomer having a crosslinking group is preferably in the above-described range from the viewpoints of physical properties such as strength and compression set and processability.

The acrylic rubber of the present invention may contain, in addition to the above-described constituent unit, a constituent unit derived from another monomer copolymerizable with the above-described constituent unit. Examples of another constituent unit include constituent units derived from an ethylenically unsaturated nitrile, constituent units derived from a (meth)acrylamide-based monomer, constituent units derived from an aromatic vinyl-based monomer, constituent units derived from a conjugated diene-based monomer, constituent units derived from a non-conjugated diene, and constituent units derived from another olefin.

Examples of the ethylenically unsaturated nitrile include compounds of acrylonitrile, methacrylonitrile, α-methoxyacrylonitrile, and vinylidene cyanide.

Examples of the (meth)acrylamide-based monomer include compounds of acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propioxymethylacrylamide, N-propioxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic acid diamide, itaconic diamide, methylmaleinamide, methylitaconamide, maleinimide, and itaconimide.

Examples of the aromatic vinyl-based monomer include compounds of styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride.

Examples of the conjugated diene-based monomer include compounds of 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene.

Examples of the constituent unit derived from a non-conjugated diene include constituent units derived from a compound of a non-conjugated diene such as 1,4-pentadiene, 1,4-hexadiene, ethylidene norbornene, norbornadiene, or dicyclopentadiene.

Examples of another olefin-based monomer include esters such as dicyclopentadienyl acrylate, dicyclopentadienyl methacrylate, dicyclopentadienyl ethyl acrylate, and dicyclopentadienyl ethyl methacrylate, and compounds of ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether.

In a case where the acrylic rubber of the present invention contains a constituent unit derived from copolymerizable another monomer described above, the content of the monomer in all the constituent units is preferably 0 to 45 mass%, or 0 to 20 mass%.

The method for manufacturing acrylic rubber of the present invention includes an emulsion polymerization step of subjecting a monomer to emulsion polymerization to obtain an emulsion polymerization solution, a coagulation step of coagulating the emulsion polymerization solution with a coagulant to obtain a hydrous crumb, a drying step of drying the hydrous crumb, and a base step of adding a base after the emulsion polymerization step, and before the base step, an ester compound other than the monomer to constitute acrylic rubber is used (added).

The step of subjecting a monomer to emulsion polymerization to obtain an emulsion polymerization solution will be described. Hereinafter, the step can also be referred to as an emulsion polymerization step.

The emulsion polymerization step is a step of subjecting a monomer to constitute acrylic rubber to emulsion polymerization to obtain an emulsion polymerization solution.

In the emulsion polymerization step, an ordinary method is to be used, and conventionally known agents that are generally used, such as an emulsifier, a polymerization initiator, a chain transfer agent, and a polymerization terminator can be used.

The emulsifier is not particularly limited, and an emulsifier generally used in an emulsion polymerization method, such as a nonionic emulsifier or an anionic emulsifier, can be used. Examples of the nonionic emulsifier include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of the anionic emulsifier include alkylbenzene sulfonate salts, alkyl sulfate salts, polyoxyethylene alkyl ether sulfate salts, polyoxyalkylene alkyl ether phosphates and salts thereof, polyoxyalkylene alkyl phenyl ether phosphates and salts thereof, and fatty acid salts such as sodium lauryl sulfate. These emulsifiers may be used singly or in combination of two or more kinds thereof. Examples of the salt include alkali metals such as sodium and potassium, ammonia, and amines.

The amount of use of the emulsifier is to be the amount such that the emulsifier is generally used in an emulsion polymerization method. Specifically, the amount is in the range of 0.01 to 10 mass%, preferably 0.03 to 7 mass%, and more preferably 0.05 to 5 mass% with respect to the amount of monomers set for preparation. In the case of using a reactive surfactant as the monomer component, use of the emulsifier is not necessarily required.

The polymerization initiator is not particularly limited, and a polymerization initiator generally used in an emulsion polymerization method can be used. Specific examples of the polymerization initiator include inorganic polymerization initiators typified by persulfates such as potassium persulfate, sodium persulfate, and ammonium persulfate, organic peroxide-based polymerization initiators such as 2,2-di(4,4-di-(t-butylperoxy)cyclohexyl)propane, 1-di-(t-hexylperoxy)cyclohexane, 1,1-di-(t-butylperoxy)cyclohexane, n-butyl-4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl(3-methylbenzoyl) peroxide, diisopropylperoxydicarbonate, di-n-propylperoxydicarbonate, di(4-t-butylcyclohexyl) peroxydicarbonate, di(2-ethylhexyl) peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-hexylperoxypivalate, t-butylperoxypivalate, 2,5-dimethyl-2,5-di(2-ethylhexanoylperoxy)hexane, 1,1,3,3-tetramethylbutyl peroxy-2-ethylhexanoate, t-hexyl peroxy-2-ethylhexanoate, t-butyl peroxy-2-ethylhexanoate, t-butylperoxylaurate, t-butyl peroxy-3,5,5-trimethylhexanoate, t-hexylperoxyisopropyl monocarbonate, t-butylperoxyisopropyl monocarbonate, t-butyl peroxy 2-ethylhexyl monocarbonate, 2,5-dimethyl-2,5-di(benzoylperoxy)hexane, t-butylperoxyacetate, t-hexyl peroxybenzoate, t-butyl peroxybenzoate, and 2,5-dimethyl-2,5-di(t-butylperoxy)hexane, and azo-based polymerization initiators such as hydroperoxide, azobisisobutyronitrile, 4-4'-azobis(4-cyanovaleric acid), 2-2'-azobis[2-(2-imidazolin-2-yl)propane, 2,2'-azobis(propane-2-carboamidine), 2-2'-azobis[N-(2-carboxyethyl)-2-methylpropanamide], 2-2'-azobis[2-[1-(2-hydroxyethyl)-2-imidazolin-2-yl]propane], 2-2'-azobis(1-imino-1-pyrrolidino-2-methylpropane), and 2-2'-azobis[2-methyl-N-[1,1-bis(hydroxymethyl)-2-hydroxyethyl]propanamide]. These polymerization initiators may be used singly or in combination of two or more kinds thereof.

The amount of use of the polymerization initiator is to be the amount such that the polymerization initiator is generally used in an emulsion polymerization method. Specifically, the amount is in the range of 0.01 to 5 mass%, preferably 0.01 to 4 mass%, and more preferably 0.02 to 3 mass% with respect to the amount of monomers set for preparation.

In addition, organic peroxides and inorganic peroxides as a polymerization initiator can be used as a redox-based polymerization initiator in combination with a reducing agent. The reducing agent used in combination is not particularly limited, and examples of the reducing agent include compounds containing a metal ion in a reduced state, such as ferrous sulfate and cuprous naphthenate, methane compounds such as sodium formaldehydesulfoxylate and sodium methanesulfonate, amine compounds such as dimethylaniline, ascorbic acid and salts thereof, and reducing inorganic salts such as alkali metal salts of sulfurous acid and thiosulfate. These reducing agents can be used singly or in combination of two or more kinds thereof. The amount of use of the reducing agent is preferably 0.0003 to 10.0 parts by mass with respect to 100 parts by mass of the monomers set for preparation.

The chain transfer agent can be used as necessary. Specific examples of the chain transfer agent include alkyl mercaptans such as n-hexyl mercaptan, n-octyl mercaptan, t-octyl mercaptan, n-dodecyl mercaptan, t-dodecyl mercaptan, and n-stearyl mercaptan, xanthogen compounds such as 2,4-diphenyl-4-methyl-1-pentene, 2,4-diphenyl-4-methyl-2-pentene, dimethylxanthogen disulfide, and diisopropylxanthogen disulfide, thiuram-based compounds such as terpinolene, tetramethylthiuram disulfide, tetraethylthiuram disulfide, and tetramethylthiuram monosulfide, phenol-based compounds such as 2,6-di-t-butyl-4-methylphenol and styrenated phenol, allyl compounds such as allyl alcohol, halogenated hydrocarbon compounds such as dichloromethane, dibromomethane, and carbon tetrabromide, vinyl ethers such as α-benzyloxystyrene, α-benzyloxyacrylonitrile, and α-benzyloxyacrylamide, triphenylethane, pentaphenylethane, acrolein, methacrolein, thioglycolic acid, thiomalic acid, and 2-ethylhexylthioglycolate. These chain transfer agents may be used singly or in combination of two or more kinds thereof. The amount of the chain transfer agent is not particularly limited, but the chain transfer agent is usually used in an amount of 0 to 5 parts by mass based on 100 parts by mass of the charged monomer.

Examples of the polymerization terminator include hydroxylamine, hydroxylamine sulfate, diethylhydroxylamine, hydroxylamine sulfonic acid and alkali metal salts thereof, sodium dimethyldithiocarbamate, and quinone compounds such as hydroquinone. The amount of use of the polymerization terminator is not particularly limited, and is usually 0 to 2 parts by mass with respect to 100 parts by mass of the total monomers.

In addition, polymerization auxiliary materials such as a particle size adjusting agent, a chelating agent, and an oxygen scavenger can be used as necessary.

The emulsion polymerization may be performed with a batch method, a semibatch method, or a continuous method. The polymerization time and the polymerization temperature are not particularly limited. The polymerization time and the polymerization temperature can be appropriately selected according to the kind and the like of the polymerization initiator to be used, and the polymerization temperature is generally 10 to 100°C, and the polymerization time is generally 0.5 to 100 hours.

The step of coagulating the emulsion polymerization solution with a coagulant to obtain a hydrous crumb will be described. Hereinafter, the step can also be referred to as a coagulation step.

The coagulant used in the coagulation step is not particularly limited, and is preferably an inorganic metal salt, and specific examples of the metal salt include sodium sulfate, magnesium sulfate, aluminum sulfate, sodium chloride, and calcium chloride.

The method of coagulation with a coagulant is not particularly limited, and a general method can be used. An example of the method is a method in which the emulsion polymerization solution is supplied to an aqueous solution containing a coagulant continuously or in batches, and as a result of this operation, a hydrous crumb is obtained. At this time, the temperature of the aqueous solution containing a coagulant is affected by, for example, the kind and the amount of use of the monomer, and the shearing force due to stirring and the like. Therefore, the temperature cannot be specified uniformly, but is generally 50°C or more, and preferably in the range of 60°C to 100°C.

The method of the present invention may include a step of washing the resulting hydrous crumb with water. Hereinafter, the step can also be referred to as a water washing step. An object of the water washing step is to remove the coagulant contained in the hydrous crumb.

The method of the present invention includes a step of drying the hydrous crumb. Hereinafter, the step can also be referred to as a drying step.

The hydrous crumb is dried by removing moisture from the hydrous crumb, and thus acrylic rubber can be obtained. The method of drying is not particularly limited, and a dryer such as a flash dryer or a fluid dryer is generally used for drying.

The drying temperature is not particularly limited, and is preferably 50°C to 250°C, and more preferably 80 to 200°C. The drying time depends on the drying temperature.

Before the drying step, a dehydration step may be performed using a centrifuge or the like.

The method for manufacturing of the present invention includes a base step of adding a base after the emulsion polymerization step, and before the base step, an ester compound other than the monomer to constitute acrylic rubber is used.

Examples of the ester compound other than the monomer to constitute acrylic rubber include phosphate ester compounds and sulfate ester compounds. The ester compound other than the monomer to constitute acrylic rubber does not constitute the acrylic rubber, and therefore have no (meth)acryloyl group.

Examples of the phosphate ester compounds include alkyl ether phosphates, alkyl phosphates, and salts thereof.

Examples of the alkyl ether phosphate and its salt include polyoxyalkylene alkyl ether phosphates such as polyoxyalkylene 2-ethylhexyl ether phosphates, polyoxyalkylene stearyl ether phosphates, polyoxyalkylene myristyl ether phosphates, polyoxyalkylene lauryl ether phosphates, polyoxyalkylene palmityl ether phosphates, polyoxyalkylene oleyl ether phosphates, and polyoxyalkylene tridecyl ether phosphates. Examples of the polyoxyalkylene include polyoxyethylene and polyoxypropylene, and examples of the salt include alkali metals such as sodium and potassium, ammonia, and amines.

The alkyl phosphate and its salt are preferably a monoalkyl phosphate or a dialkyl phosphate having 12 to 24 carbon atoms and its salt, or a monoalkyl phosphate or a dialkyl phosphate having 16 to 18 carbon atoms and its salt. Specific examples of the alkyl phosphate include stearyl phosphate, myristyl phosphate, lauryl phosphate, and palmityl phosphate, and examples of the salt include alkali metals such as sodium and potassium, ammonia, and amines.

Examples of the sulfate ester compounds include alkyl ether sulfates, alkyl sulfates, and salts thereof.

Examples of the alkyl ether sulfate and its salt include polyoxyalkylene stearyl ether sulfates, polyoxyalkylene myristyl ether sulfates, polyoxyalkylene lauryl ether sulfates, and polyoxyalkylene palmityl ether sulfates. Examples of the polyoxyalkylene include polyoxyethylene and polyoxypropylene, and examples of the salt include alkali metals such as sodium and potassium, ammonia, and amines.

The alkyl sulfate and its salt are preferably a monoalkyl sulfate or a dialkyl sulfate having 12 to 24 carbon atoms and its salt, or a monoalkyl sulfate or a dialkyl sulfate having 16 to 18 carbon atoms and its salt. Specific examples of the alkyl sulfate include stearyl sulfate, myristyl sulfate, lauryl sulfate, and palmityl sulfate, and examples of the salt include alkali metals such as sodium and potassium, ammonia, and amines.

The ester compound other than the monomer to constitute acrylic rubber is to be used before the base step. Specifically, the ester compound is to be used in the emulsion polymerization step, the coagulation step, or the water washing step, or the ester compound is to be used between the steps of the emulsion polymerization step, the coagulation step, and the water washing step.

In the method for manufacturing of the present invention, the ester compound may function as an emulsifier in the emulsion polymerization step, a lubricant to improve the workability after drying, or the like, and the purpose of use is not particularly limited. The ester compound is particularly preferably used as an emulsifier in the emulsion polymerization step.

After the emulsion polymerization step, in the base step of adding a base, a relationship of 0.15 ≤ (X/Y)/Z ≤ 2.5 is satisfied in which X represents the amount of the base used in the base step by part by mass based on 100 parts by mass of the ester compound other than the monomer to constitute acrylic rubber, Y represents the molecular weight of the base used in the base step, and Z represents the valence of the base used in the base step.

Examples of the base used in the base step include hydroxide compounds such as sodium hydroxide, potassium hydroxide, and calcium hydroxide, carbonate compounds such as sodium hydrogen carbonate and potassium carbonate, and organic amine compounds such as ammonia, inorganic ammonium compounds, and triethylamine, and sodium hydrogen carbonate and sodium hydroxide are preferable. The base is blended mainly for the purpose of neutralizing the ester in which hydrolysis proceeds in the process of manufacturing acrylic rubber rather than directly acting on the ester compound.

In the present invention, a relationship of 0.15 ≤ (X/Y)/Z ≤ 2.5 is preferably satisfied, 0.18 ≤ (X/Y)/Z ≤ 2.3 is more preferably satisfied, and 0.18 ≤ (X/Y)/Z ≤ 1.5 is still more preferably satisfied in which X represents the amount of the base used in the base step by part by mass based on 100 parts by mass of the ester compound other than the monomer to constitute acrylic rubber, Y represents the molecular weight of the base used in the base step, and Z represents the valence of the base used in the base step.

The timing of the base step is not particularly limited as long as the base step is performed after the emulsion polymerization step and after the ester compound is used, and the base step is preferably performed before the drying step or before the dehydration step followed by the drying step, and may be performed after the coagulation step.

From the viewpoint of processability, the acrylic rubber thus manufactured to be used in the present invention preferably has a molecular weight in the range such that in a Mooney scorch test specified in JIS K 6300, the Mooney viscosity (ML₁₊₄) at 100°C is 10 to 100, more preferably 15 to 90, and still more preferably 20 to 80.

### <Acrylic Rubber-Containing Composition>

The acrylic rubber-containing composition of the present invention contains at least the acrylic rubber and a crosslinking agent.

As the crosslinking agent, conventionally known crosslinking agents can be used such as polyvalent amine compounds, polyvalent epoxy compounds, polyvalent isocyanate compounds, aziridine compounds, sulfur compounds, higher fatty acid metal salts (fatty acid metal soaps), and thiol compounds.

Examples of the higher fatty acid metal salts include alkali metal salts and alkaline earth metal salts of a fatty acid having an alkyl group or an alkenyl group with 8 to 18 carbon atoms, such as sodium stearate, potassium stearate, potassium myristate, sodium palmitate, calcium stearate, magnesium stearate, sodium oleate, potassium oleate, and barium oleate. These higher fatty acid metal salts may be used singly or in combination of two of more kinds thereof.

Examples of the polyvalent amine compounds include aliphatic polyvalent amine compounds such as hexamethylenediamine, hexamethylenediamine carbamate, and N,N'-dicinnamylidene-1,6-hexanediamine, and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic dihydrazide.

Examples of the polyvalent epoxy compounds include glycidyl ether type epoxy compounds such as phenol novolac type epoxy compounds, cresol novolac type epoxy compounds, cresol type epoxy compounds, bisphenol A type epoxy compounds, bisphenol F type epoxy compounds, brominated bisphenol A type epoxy compounds, brominated bisphenol F type epoxy compounds, and hydrogenated bisphenol A type epoxy compounds, and other polyvalent epoxy compounds such as alicyclic epoxy compounds, glycidyl ester type epoxy compounds, glycidyl amine type epoxy compounds, and isocyanurate type epoxy compounds.

Examples of the polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of the aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of the sulfur compounds include sulfur, 4,4'-dithiomorpholine, tetramethylthiuram disulfide, and tetraethylthiuram disulfide.

Examples of the thiol compounds include 1,3,5-triazinedithiol and its derivatives, and 1,3,5-triazinetrithiols such as 1,3,5-triazine-2,4,6-trithiol.

These crosslinking agents may be used singly or in combination of two or more kinds thereof. The amount of the crosslinking agent is 0.05 to 20 parts by mass, preferably 0.1 to 10 parts by mass with respect to 100 parts by mass of the acrylic rubber of the present invention.

In the acrylic rubber-containing composition of the present invention, any another additive usually used in the art can be blended, and examples of the additive include lubricants, anti-aging agents, light stabilizers, fillers, reinforcing agents, plasticizers, processing aids, pigments, colourants, crosslinking accelerators, crosslinking aids, crosslinking retarders, antistatic agents, and foaming agents.

Examples of the anti-aging agents include amines, phosphates, quinolines, cresols, phenols, and dithiocarbamate metal salts, and amines are preferable such as diphenylamine derivatives such as 4,4'-bis(α,α-dimethylbenzyl)diphenylamine, and phenylenediamine derivatives.

Examples of the crosslinking accelerators include guanidine compounds, amine compounds, thiourea compounds, thiazole compounds, sulfenamide compounds, thiuram compounds, and quaternary ammonium salts, and the guanidine compounds and the amine compounds are preferable.

Furthermore, rubber, a resin, or the like can be blended as usually blended in the technical field. Examples of the rubber used in the present invention include butadiene rubber, styrene-butadiene rubber, isoprene rubber, natural rubber, acrylonitrile-butadiene rubber, acrylonitrile-butadiene-isoprene rubber, ethylenepropylene-diene rubber, and epichlorohydrin rubber. Examples of the resin include a polymethyl methacrylate (PMMA) resin, a polystyrene (PS) resin, a polyurethane (PUR) resin, a polyvinyl chloride (PVC) resin, an ethylene/vinyl acetate (EVA) resin, a styrene/acrylonitrile (AS) resin, and a polyethylene (PE) resin.

The total blending amount of the rubber and the resin is 50 parts by mass or less, preferably 10 parts by mass or less, and more preferably 1 part by mass or less with respect to 100 parts by mass of the acrylic rubber of the present invention.

The method for manufacturing an acrylic rubber-containing composition of the present invention includes a step of blending the crosslinking agent into the acrylic rubber obtained with the method for manufacturing acrylic rubber.

In the method of blending the acrylic rubber-containing composition of the present invention, any means conventionally used in the field of polymer processing can be used, and examples of the means include an open roll, a Banbury mixer, and various kneaders.

As the blending procedure, an ordinary procedure performed in the field of polymer processing can be used. For example, a procedure can be used in which only a polymer is first kneaded, then a compounding agent, other than a crosslinking agent and a crosslinking accelerator, is added to produce a kneading A compound, and then kneading B is performed in which the crosslinking agent and the crosslinking accelerator are added.

A crosslinked acrylic rubber product is obtained by crosslinking the acrylic rubber-containing composition, and the method for manufacturing the crosslinked acrylic rubber product includes a step of crosslinking the acrylic rubber-containing composition obtained with the method for manufacturing an acrylic rubber-containing composition.

In the step of crosslinking the acrylic rubber-containing composition, the acrylic rubber-containing composition is usually heated to 100 to 250°C to obtain a crosslinked product. The crosslinking time depends on the temperature, and is usually 0.5 to 300 minutes. Crosslinking molding may be performed with a method in which crosslinking and molding are integrally performed, a method in which the acrylic rubber-containing composition is previously molded and then heated to obtain a crosslinked product, or a method in which the acrylic rubber-containing composition is previously heated and the resulting crosslinked product is processed for molding. As a specific method of the crosslinking molding, any method can be used, and examples of the method include compression molding with a mold, injection molding, and heating with a steam can, an air bath, infrared rays, or microwaves.

Therefore, the above-described characteristics of the crosslinked product of the present invention are utilized to use the crosslinked product suitably as various gaskets such as an O-ring, a packing, a diaphragm, an oil seal, a shaft seal, a bearing seal, a mechanical seal, a wellhead seal, a seal for electric and electronic equipment, a seal for pneumatic equipment, a cylinder head gasket mounted on a connecting portion between a cylinder block and a cylinder head, a rocker cover gasket mounted on a connecting portion between a rocker cover and a cylinder head, an oil pan gasket mounted on a connecting portion between an oil pan and a cylinder block or a transmission case, a gasket, for a fuel cell separator, mounted between a pair of housings sandwiching a unit cell including a positive electrode, an electrolyte plate, and a negative electrode, and a gasket for a top cover of a hard disk drive.

Furthermore, the crosslinked product in the present invention can be used as a rubber material, and can be suitably used, as an extrusion molded product and a mold crosslinked product used for an automobile, in various hoses. The hoses include, for example, fuel oil hoses around a fuel tank such as a fuel hose, a filler neck hose, a vent hose, a vapor hose, and an oil hose, air hoses such as a turbo air hose and an emission control hose, a radiator hose, a heater hose, a brake hose, and an air conditioner hose.

### EXAMPLES

The present invention will be specifically described with reference to Examples and Comparative Examples. However, the present invention is not limited thereto.

In Examples and Comparative Examples, acrylic rubber was manufactured, and the physical properties of an acrylic rubber-containing composition containing the resulting acrylic rubber and a crosslinking agent, and the physical properties of a rubber material produced using the acrylic rubber-containing composition (specifically, a crosslinked product obtained by crosslinking) were evaluated.

### (Manufacture of Emulsion Polymerization Solution A)

A polymerization reactor equipped with a thermometer, a stirrer, a nitrogen inlet tube, and a pressure reducer was charged with 150 parts by mass of water, 1.2 parts by mass of a sodium salt of polyoxyethylene 2-ethylhexyl ether phosphate as an ester compound, 98.0 parts by mass of ethyl acrylate as a monomer, and 2.0 parts by mass of vinyl monochloroacetate, degassing by reducing pressure and substitution with nitrogen were repeated to remove oxygen sufficiently, then 0.12 parts by mass of sodium formaldehydesulfoxylate and 0.1 parts by mass of cumene hydroperoxide were added to initiate an emulsion polymerization reaction at normal pressure and normal temperature, and the reaction was continued until the polymerization conversion rate reached 95% to obtain an emulsion polymerization solution A.

### (Manufacture of Emulsion Polymerization Solution B)

An emulsion polymerization solution B was obtained in the same manner as in the manufacture of the emulsion polymerization solution A except that the monomers used to charge the polymerization reactor and the amounts thereof were changed to 48.0 parts by mass of ethyl acrylate, 25.0 parts by mass of n-butyl acrylate, 25.0 parts by mass of 2-methoxyethyl acrylate, and 2.0 parts by mass of vinyl monochloroacetate. The polymerization conversion rate at this time was 99%.

### (Manufacture of Emulsion Polymerization Solution C)

An emulsion polymerization solution C was obtained in the same manner as in the manufacture of the emulsion polymerization solution B except that the emulsifier used to charge the polymerization reactor was changed to 0.42 parts by mass of sodium lauryl sulfate (that is, a sodium salt of lauryl sulfate) as an ester compound and 0.6 parts by mass of polyoxyethylene alkyl ether. The polymerization conversion rate at this time was 99%.

Next, acrylic rubber is manufactured using the emulsion polymerization solution through the coagulation step and the drying step. Here, in a case where the method for manufacturing further includes the base step, the value of (X/Y)/Z is also described in which X represents the amount of the base used in the base step by part by mass based on 100 parts by mass of the ester compound other than the monomer to constitute acrylic rubber, Y represents the molecular weight of the base used in the base step, and Z represents the valence of the base used in the base step.

### [Example 1]

### (Manufacture of Acrylic Rubber A)

Into a beaker, 100 parts by mass of water and 6 parts by mass of sodium sulfate were put and heated to 90 °C. Next, 100 parts by mass of the emulsion polymerization solution A was added dropwise, thus the polymer was coagulated to obtain a hydrous crumb, and then 0.24 parts by mass of sodium hydrogen carbonate was added as a base. Next, the polymer was washed with 250 parts by mass of water twice, and dried at 85°C for 16 hours to obtain acrylic rubber A. Here, the value of (X/Y)/Z is 0.60.

### [Example 2]

### (Manufacture of Acrylic Rubber B)

Acrylic rubber B was manufactured in the same manner as the acrylic rubber A except that the base was changed to 0.36 parts by mass of a 10 wt% sodium hydroxide aqueous solution. Here, the value of (X/Y)/Z is 0.19.

### [Example 3]

### (Manufacture of Acrylic Rubber C)

Acrylic rubber C was manufactured in the same manner as the acrylic rubber A except that the base was changed to 0.36 parts by mass of sodium hydrogen carbonate. Here, the value of (X/Y)/Z is 0.89.

### [Example 4]

### (Manufacture of Acrylic Rubber D)

Acrylic rubber D was manufactured in the same manner as the acrylic rubber A except that the emulsion polymerization solution was changed to the emulsion polymerization solution B. Here, the value of (X/Y)/Z is 0.60.

### [Example 5]

### (Manufacture of Acrylic Rubber E)

Acrylic rubber E was manufactured in the same manner as the acrylic rubber D except that the base was changed to 3.6 parts by mass of 10 wt% sodium hydroxide. Here, the value of (X/Y)/Z is 1.88.

### [Example 6]

### (Manufacture of Acrylic Rubber F)

Acrylic rubber F was manufactured in the same manner as the acrylic rubber A except that the emulsion polymerization solution was changed to the emulsion polymerization solution C and the base was changed to 0.24 parts by mass of sodium hydrogen carbonate. Here, the value of (X/Y)/Z is 2.27.

### (Manufacture of Acrylic Rubber G)

### [Comparative Example 1]

Acrylic rubber G was manufactured in the same manner as the acrylic rubber A except that no base was added.

### (Manufacture of Acrylic Rubber H)

### [Comparative Example 2]

Acrylic rubber H was manufactured in the same manner as the acrylic rubber D except that no base was added.

### (Manufacture of Acrylic Rubber I)

### [Comparative Example 3]

Acrylic rubber I was manufactured in the same manner as the acrylic rubber F except that no base was added.

### [Comparative Example 4]

### (Manufacture of Acrylic Rubber J)

Acrylic rubber J was manufactured in the same manner as the acrylic rubber D except that the base was changed to 0.04 parts by mass of sodium hydrogen carbonate. Here, the value of (X/Y)/Z is 0.10.

### [Comparative Example 5]

### (Manufacture of Acrylic Rubber K)

Acrylic rubber K was manufactured in the same manner as the acrylic rubber D except that the base was changed to 1.21 parts by mass of sodium hydrogen carbonate. Here, the value of (X/Y)/Z is 3.00.

### (Method of Acceleration during Storage of Acrylic Rubber)

Each acrylic rubber manufactured was stored for 7 days in a thermo-hygrostat (PR-3K manufactured by ESPEC CORP.) in which the atmosphere was adjusted to have a temperature of 80°C and a humidity of 75%. Then, each acrylic rubber was taken out and sufficiently dried.

### (Method of Evaluating Storage Stability)

The acrylic rubber without acceleration during storage and the acrylic rubber subjected to acceleration during storage were each kneaded with the formulation in Table 1 to manufacture acrylic rubber compositions, and the physical properties were compared between the composition subjected to acceleration and the composition subjected to no acceleration.

### (Manufacture of Acrylic Rubber Composition)

First, the compounding agents shown in Table 1 were each kneaded with a kneader at 100°C to prepare a kneading A compound. The kneading A compound was kneaded with an open roll at room temperature to prepare a kneading B compound. In Table 1, the sign "A" indicates that the material is a raw material of the kneading A compound, and the sign "B" indicates that the material is a raw material to be blended in the kneading A compound at the time of preparing the kneading B compound. The unit for the compounding agents in Table 1 is part by mass. As the anti-aging agent, 4,4'-bis(α,α-dimethylbenzyl)diphenylamine was used.

### (Production of Uncrosslinked Sheet)

Each acrylic copolymer-containing composition obtained above was kneaded with a kneader and an open roll to produce an uncrosslinked sheet having a thickness of 2 to 2.5 mm.

### (Mooney Scorch Test)

The resulting uncrosslinked sheet was measured in a Mooney scorch test specified in JIS K 6300-1 at 125°C using Mooney Viscometer AM-3 manufactured by Toyo Seiki Seisaku-sho, Ltd. Table 1 shows the results.

### (Production of Secondary Crosslinked Product)

The uncrosslinked rubber sheet obtained above was pressed at 180°C for 10 minutes to obtain a primary crosslinked product having a thickness of 2 mm. The primary crosslinked product was further heated in an air oven at 180°C for 3 hours to obtain a secondary crosslinked product.

### (Test of Normal Physical Properties)

The obtained secondary crosslinked product was evaluated in a tensile test and a hardness test. The tensile test was performed in accordance with the method described in JIS K 6251, and the hardness test was performed in accordance with the method described in JIS K 6253.

Table 1 shows the test results obtained with each test method in Examples and Comparative Examples.

In Table 1, the terms "minimum Mooney value Vm" and "t5" mean the minimum Mooney viscosity and the Mooney scorch time (scorch time (t5)) specified in the Mooney scorch test of JIS K 6300-1, respectively. The terms "100M", "tensile strength", and "elongation" mean the tensile stress, the tensile strength, and the elongation at 100% elongation specified in the tensile test of JIS K 6251, respectively, and the term "hardness" means the hardness specified in the hardness test of JIS K 6253. Table 1 shows the results.

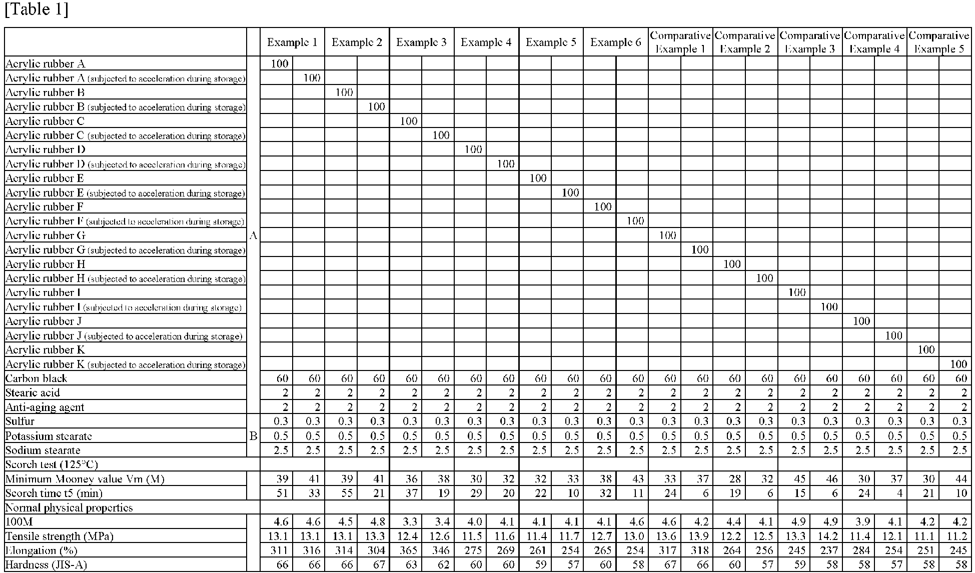

Table 1 shows that the acrylic rubber obtained with the method for manufacturing of the present invention in Examples maintains the scorch time (t5) (10 minutes or more), and that the difference in the minimum Mooney value is small between the acrylic rubber without acceleration during storage and the acrylic rubber subjected to acceleration during storage. Thus, the acrylic rubber in Examples is excellent in storage stability. Meanwhile, in the acrylic rubber in Comparative Examples, the scorch time (t5) lessened (less than 10 minutes), or the minimum Mooney value changed largely. Thus, it has been shown that the acrylic rubber in Comparative Examples is inferior to that in Examples in storage stability.

### INDUSTRIAL APPLICABILITY

The acrylic rubber obtained with the method for manufacturing acrylic rubber of the present invention is excellent in storage stability, and the rubber material produced using a composition containing the obtained acrylic rubber (specifically, a crosslinked product obtained by crosslinking) is excellent in heat resistance and oil resistance, and therefore is suitable for a rubber material for members used in automobiles, such as a sealing material, a hose material, an anti-vibration material, a tube material, a belt material, and a boot material.

## Claims

1. A method for manufacturing acrylic rubber, the method comprising:
an emulsion polymerization step of subjecting a monomer to emulsion polymerization to obtain an emulsion polymerization solution;
a coagulation step of coagulating the emulsion polymerization solution with a coagulant to obtain a hydrous crumb;
a drying step of drying the hydrous crumb; and
a base step of adding a base after the emulsion polymerization step,
wherein an ester compound other than the monomer to constitute acrylic rubber is used before the base step, and
a relationship of 0.15 ≤ (X/Y)/Z ≤ 2.5 is satisfied wherein X represents an amount of the base used in the base step by part by mass based on 100 parts by mass of the ester compound, Y represents a molecular weight of the base used in the base step, and Z represents a valence of the base used in the base step.

2. The method according to claim 1, wherein the ester compound is a phosphate ester compound and/or a sulfate ester compound.

3. A method for manufacturing an acrylic rubber-containing composition, the method comprising a step of blending a crosslinking agent into the acrylic rubber obtained with the method according to claim 1 or 2.

4. A method for manufacturing a crosslinked acrylic rubber product, the method comprising a step of crosslinking an acrylic rubber composition obtained with the method according to claim 3.

## Patentansprüche

1. Verfahren zur Herstellung von Acrylkautschuk, wobei das Verfahren umfasst:
einen Emulsionspolymerisationsschritt des Unterziehens eines Monomers einer Emulsionspolymerisation, um eine Emulsionspolymerisationslösung zu erhalten;
einen Koagulationsschritt des Koagulierens der Emulsionspolymerisationslösung mit einem Koagulationsmittel, um einen wasserhaltigen Krümel zu erhalten;
einen Trocknungsschritt des Trocknens des wasserhaltigen Krümels; und
einen Basenschritt des Hinzufügens einer Base nach dem Emulsionspolymerisationsschritt,
wobei eine andere Esterverbindung als das Monomer zur Bildung des Acrylkautschuks vor dem Basenschritt verwendet wird, und
eine Beziehung von 0,15 ≤ (X/Y)/Z ≤ 2,5 erfüllt ist, wobei X eine Menge der in dem Basenschritt verwendeten Base in Massenteilen basierend auf 100 Massenteilen der Esterverbindung darstellt, Y ein Molekulargewicht der in dem Basenschritt verwendeten Base darstellt, und Z die Wertigkeit der in dem Basenschritt verwendeten Base darstellt.

2. Verfahren nach Anspruch 1, wobei die Esterverbindung eine Phosphatesterverbindung und/oder eine Sulfatesterverbindung ist.

3. Verfahren zur Herstellung einer acrylkautschukhaltigen Zusammensetzung, wobei das Verfahren einen Schritt des Mischens eines Vernetzungsmittels in den mit dem Verfahren nach Anspruch 1 oder 2 erhaltenen Acrylkautschuk umfasst.

4. Verfahren zur Herstellung eines vernetzten Acrylkautschukprodukts, wobei das Verfahren einen Schritt des Vernetzen einer mit dem Verfahren nach Anspruch 3 erhaltenen Acrylkautschukzusammensetzung umfasst.

## Revendications

1. Procédé de fabrication de caoutchouc acrylique, le procédé comprenant :
une étape de polymérisation en émulsion consistant à soumettre un monomère à une polymérisation en émulsion pour obtenir une solution de polymérisation en émulsion ;
une étape de coagulation consistant à faire coaguler la solution de polymérisation en émulsion avec un coagulant pour obtenir un granulé hydraté ;
une étape de séchage consistant à sécher le granulé hydraté ; et
une étape de base consistant à ajouter une base après l'étape de polymérisation en émulsion,
dans lequel un composé d'ester autre que le monomère pour constituer du caoutchouc acrylique est utilisé avant l'étape de base, et
une relation de 0,15 <(X/Y)/Z ≤ 2,5 est satisfaite, dans laquelle X représente une quantité de la base utilisée dans l'étape de base en partie en masse basée sur 100 parties en masse du composé d'ester, Y représente un poids moléculaire de la base utilisée dans l'étape de base et Z représente une valence de la base utilisée dans l'étape de base.

2. Procédé selon la revendication 1, dans lequel le composé d'ester est un composé d'ester de phosphate et/ou un composé d'ester de sulfate.

3. Procédé de fabrication d'une composition contenant du caoutchouc acrylique, le procédé comprenant une étape de mélange d'un agent de réticulation dans le caoutchouc acrylique obtenu avec le procédé selon la revendication 1 ou 2.

4. Procédé de fabrication d'un produit de caoutchouc acrylique réticulé, le procédé comprenant une étape de réticulation d'une composition de caoutchouc acrylique obtenue avec le procédé selon la revendication 3.
